(19) **Europäisches Patentamt**
**European Patent Office**
**Office européen des brevets**

(11) **EP 1 613 011 B1**

(12) **EUROPEAN PATENT SPECIFICATION**

(45) Date of publication and mention
of the grant of the patent:
**30.07.2008 Bulletin 2008/31**

(51) Int Cl.:
*H04L 25/02* (2006.01)     *H04L 1/06* (2006.01)
*H04B 7/08* (2006.01)

(21) Application number: **04291642.9**

(22) Date of filing: **29.06.2004**

(54) **Channel estimation for a multi-carrier telecommunication system**

Kanalschätzung für ein Mehrträgerkommunikationssystem

Estimation de canal pour un système de communication multiporteuse

(84) Designated Contracting States:
**AT BE BG CH CY CZ DE DK EE ES FI FR GB GR
HU IE IT LI LU MC NL PL PT RO SE SI SK TR**

(43) Date of publication of application:
**04.01.2006 Bulletin 2006/01**

(73) Proprietors:
• **Mitsubishi Electric Information Technology
Centre
Europe B.V.
1119 NS Schiphol Rijk (NL)**
Designated Contracting States:
**FR**
• **MITSUBISHI DENKI KABUSHIKI KAISHA
Chiyoda-ku
Tokyo 100-8310 (JP)**
Designated Contracting States:
**AT BE BG CH CY CZ DE DK EE ES FI GB GR HU
IE IT LI LU MC NL PL PT RO SE SI SK TR**

(72) Inventors:
• **Hara, Yoshitaka
Mitsubishi Electric ITE
35708 Rennes Cedex 7 (FR)**
• **Taira, Akinori
Mitsubishi Electric ITE
35708 Rennes Cedex 7 (FR)**

(74) Representative: **Saint-Marc-Etienne, Christophe
Andréas
Cabinet Le Guen & Maillet,
5, place Newquay,B.P. 70250
35802 Dinard Cedex (FR)**

(56) References cited:
**US-A- 5 822 380      US-A- 5 973 642
US-B1- 6 327 315**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method for transmitting data by means of multiple carrying signals through at least one communication channel, which method involves a computation of channel parameters representative each of a response of said communication channel to one of said carrying signals, said method including a preliminary estimation step in the course of which preliminary estimates of the channel parameters are generated, and a secondary estimation step in the course of which the preliminary estimates generated during the preliminary estimation step are to be refined.

Such transmitting methods are likely to be used in MC-CDMA (standing for "MultiCarrier-Code Division Multiple Access") telecommunication systems, in which optimal operation of any given receiver requires accurate prior knowledge of the channel frequency response for said receiver to be able to recognize incoming information symbols. The preliminary estimates of the channel parameters are usually generated with the help of pilot symbols transmitted by means of each of the carrying signals, which pilot symbols are known beforehand by the receiver, so that the receiver may deduce, from a comparison between what was expected by said receiver and what was actually received, the effect of the communication channel on the transmitted symbols, said effect then being quantified by means of the preliminary estimates.

In most transmitting methods known in the current state of the art, as example in the patent US 5,973,642, any given preliminary estimate will have successive values deduced after transmission of successive pilot symbols by means of the carrying signal to which said given preliminary estimate corresponds, so that the preliminary estimates are generally averaged over time during the secondary estimation step, in order to produce the channel parameters. Such an averaging process will thus require a substantial time duration for its execution, since numerous preliminary estimates will be needed for their average value to be significant. This may prevent efficient operation of the telecommunication system described above in cases where the transmitted signals are intended to carry data packets. Indeed, in such applications, the channel response must be quantified for the whole transmission duration of each data packet on the basis of very few pilot symbols. This requires an almost instantaneaous execution of preliminary and secondary estimation steps, which the above-described known transmitting methods do not enable to perform accurately because of the time-averaging process.

The invention aims at solving the aforementioned problems, by providing a transmitting method according to which the channel response estimation may be performed almost instantaneously on the basis of a very limited number of received pilot symbols, and which is thus suitable for data packet transmission.

Indeed, a method for transmitting data as described in the opening paragraph is characterized according to the invention in that the preliminary estimates generated during the preliminary estimation step are refined in the course of the secondary estimation step by computing at least one average value of a correlation parameter, which average value is computed over at least two different carrying signals.

The invention makes use of the fact that neighbouring channels may have similar properties by virtue of the basic physic principle of continuity. The channel response of a given channel thus may give some information on channel responses of neighbouring channels, provided that said channels are sufficiently correlated together, which means that a preliminary channel estimate produced for a given channel may thus also be of interest in the evaluation of channel parameters related to neighbouring channels. The invention thus allows to exploit more thoroughly the whole amount of information produced by the preliminary estimation step.

According to a specific embodiment of the invention, the secondary estimation step includes a weight determination sub-step in the course of which weighting coefficients to be applied to the preliminary estimates are determined by computing at least one average value of a correlation parameter, which average value is computed over at least two different carrying signals.

Such a secondary estimation step will enable to pool together in a simple manner information produced in relation with different channel parameters. Such a pooling, is implemented through the determination of the values of the weighting coefficients to be applied to the preliminary estimates when computing the linear combination intended to yield said given channel parameter, which determination depends on the average value of the correlation parameter related to said given channel parameter, as will be explained hereinafter.

According to a variant of the invention, the weight determination sub-step involves minimizing an average value of an error criterion, which average value is computed over at least two carrying signals.

The error criterion may be a simple difference between the estimated and real channel parameters, but will preferably be a squared value of said difference. As will be explained hereinafter, the use of such an error criterion enables to compute weighting coefficients by solving a simple equation system, which may be performed almost instantaneously by matricial computation.

According to a first embodiment of this variant, the weight determination sub-step involves determination of a correlation matrix having elements computed as average values, over at least two different carrying signals, of correlations between preliminary estimates of channel parameters related to said carrying signals.

EP 1 613 011 B1

This first embodiment is very easy to implement, each element of the correlation matrix being obtained by computing a single average value between two preliminary estimates.

According to a second embodiment of the above-described variant, the weight determination sub-step involves determination of a correlation matrix having elements computed as average values, over different carrying signals, of linear combinations of correlations between preliminary estimates of channel parameters related to said carrying signals.

This second embodiment, though requiring more computing power for its implemention than the first one, remains quite easy to perform and enables to involve all relevant preliminary estimates in the computation of each element of the correlation matrix, which thus allows the most extensive use of the information contained in said preliminary estimates for the determination of the channel parameters.

According to a third embodiment of the invention, a method as described hereinbefore will advantageously include a comparison step in the course of which the average value of the correlation parameter is compared to a predetermined threshold, the secondary estimation step being actually computed only if said average value exceeds said predetermined threshold.

The comparison step enables to determine, before actually executing the secondary estimation step, if said secondary estimation step will indeed produce more accurate values for the channel parameters than the preliminary estimates. As explained above, a significant improvement with respect to said preliminary estimates will only be obtained if neighbour channels are sufficiently linked to each other, which is expressed by an average value of the correlation parameter exceeding the predetermined threshold. If this condition is not fulfilled, the preliminary estimates being then directly selected for constituting the channel parameters.

Another variant of the invention, which may be used alternatively pr cumulatively with the previous one, enables to enhance the accuracy of the channel parameters coumputed as described above in cases where the transmitted signals are to be picked up by a multiple antenna receiver.

This other variant thus relates to a method for transmitting data intended to be used in a telecommunication system in which at least one receiver is provided with multiple receiving antennas, each being able to pick up the multiple carrying signals by means of which data is to be transmitted, which method involves a computation of multiple groups of channel parameters, each group comprising channel parameters representative of a channel response to carrying signals picked up by a given antenna, which channel parameters are computed by carrying out a method as described above, and an averaging step, in the course of which an average value between at least two channel parameters related to a same carrying signal and to at least two different groups of channel parameters is computed for each carrying signal.

This other variant of the invention enables to increase the amount of information related to a same carrying signal to be pooled together, which will give a higher relevance to the channel parameter whose value is averaged over multiple receiving antennas, without causing a significant increase in the computation time of this averaged value.

According to one of its hardware-related aspects, the invention also relates to a telecommunication system including at least one transmitter and one receiver linked together by at least one wireless communication channel through which data is to be transmitted by means of multiple carrying signals, which receiver is to perform a computation of channel parameters representative each of a response of said communication channel to one of said carrying signals, said receiver including preliminary estimation means intended to generate preliminary estimates of the channel parameters, and secondary estimation means intended to refine the preliminary estimates generated by the preliminary estimation means, by computing linear combinations of at least two of said preliminary estimates, each linear combination being intended to yield a given channel parameter, system characterized in that the secondary estimation means are to cooperate with a weight determination module intended to determine weighting coefficients to be applied to the preliminary estimates by computing at least one average value of a correlation parameter, which average value is computed over at least two different carrying signals.

According to a specific aspect of the invention, such a system will advantageously include comparison means for comparing the average value of the correlation parameter to a predetermined threshold, and activation means for triggering computation of the linear combinations of the preliminary estimates only if said average value exceeds said predetermined threshold.

Such activation means may simply consist in MOS switches whose grids are connected to an output of an opamp comparator, and placed between Gilbert cells intended to multiply the preliminary etimates with their respective weighting coefficients, on the one hand, and a power supply of said cells, on the other hand.

According to another of its hardware-related aspects, the invention also relates to a receiving device for receiving data transmitted through at least one wireless communication channel by means of multiple carrying signals, which receiving device is to perform a computation of channel parameters representative each of a response of said communication channel to one of said carrying signals, said receiving device including preliminary estimation means intended to generate preliminary estimates of the channel parameters, and secondary estimation means intended to refine the preliminary estimates generated by the preliminary estimation means, by computing linear combinations of at least two of said preliminary estimates, each linear combination being intended to yield a given channel parameter, receiving device characterized in that the secondary estimation means are to cooperate with a weight determination module intended to determine weighting coefficients to be applied to the preliminary estimates by computing at least one average value of a correlation parameter, which average value is computed over at least two different carrying signals.

According to a specific embodiment of this other harware-related aspect of the invention, such a receiving device will advantageously include comparison means for comparing the average value of the correlation parameter to a predetermined threshold, and activation means for triggering computation of the linear combinations of the preliminary estimates only if said average value exceeds said predetermined threshold.

The characteristics of the invention mentioned above, as well as others, will emerge more clearly from a reading of the following description given in relation to the accompanying figures, amongst which:

Fig.1 is a schematic diagram depicting a telecommunication system including channel estimation means for carrying out an estimation of channel parameters according to the invention;
Fig.2 is a block diagram depicting a receiving device included in such a telecommunication system; and
Fig.3 is a block diagram depicting a receiving device according to a particular embodiment of the invention.

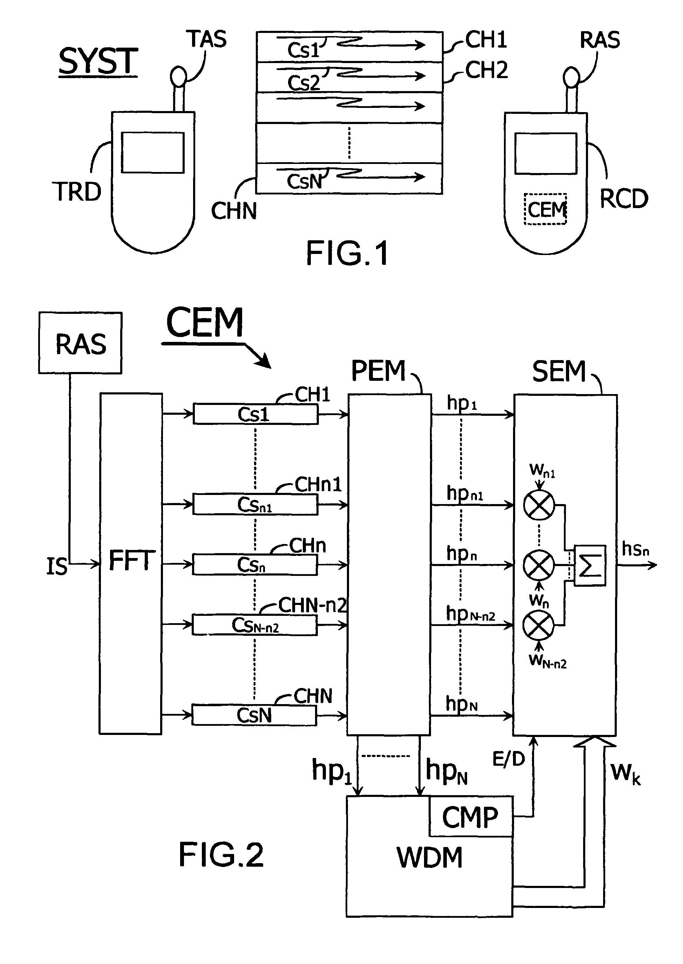

Fig.1 shows a telecommunication system SYST including at least one transmitting device TRD and at least one receiving device RCD, which include respective transmitting and receiving antenna systems TAS and RAS linked together by a plurality of communication channels CH1, CH2...CHN through which multiple carrying signals $Cs_1, Cs_2...Cs_N$ are to be transmitted. The receiving device RCD includes channel estimation means CEM intended to compute channel parameters representative each of a response of one of said communication channels CH1, CH2...CHN to one of said carrying signals $Cs_1, Cs_2...Cs_N$.

Fig.2 diagrammaticaly shows a receiving device including channel estimation means CEM for carrying out an estimation of channel parameters according to the invention. This receiving device includes a receiving antenna system RAS intended to pick up and incoming signal IS including a plurality of carrying signals $Cs_i$ (for i=1 to N) transmitted through respective communication channels CHi, which are to be separated from one another by a Fast Fourrier Transform module FFT to which the incoming signal IS is fed.

The channel estimation means CEM included in the receiving device comprise preliminary estimation means PEM for generating preliminary estimates $hp_i$ (for i=1 to N) of the channel parameters, and secondary estimation means SEM for refining the preliminary estimates $hp_i$ generated by the preliminary estimation means PEM and producing secondary estimates hsn.

In this embodiment of the invention, the refining performed by the secondary estimation means SEM for producing any given secondary estimation hsn of a channel parameter related to a given carrying signal $Cs_n$ consists in computing a linear combination of preliminary estimates $hp_{n1}...hp_n...hp_{N-n2}$ related to a group of N-n2-n1+1 adjacent carrying signals $Cs_{n1}...Cs_n...Cs_{N-n2}$ enclosing said given carrying signal $Cs_n$.

To this end, the channel estimation means CEM included in the receiving device according to the invention comprise a weight determination module WDM intended to produce weighting coefficients $w_k$ to be applied to the preliminary estimates $hp_{n1}...hp_n...hp_{N-n2}$, these weighting coefficients $w_k$ being determined by computing at least one average value of a correlation parameter, which average value is computed over at least two different carrying signals, as will be explained hereinafter.

In this embodiment of the invention, the weight determination module WDM includes comparison means CMP for comparing the average value of the correlation parameter to a predetermined threshold, and activation means (not shown) for triggering computation of the linear combinations of the preliminary estimates only if said average value exceeds said predetermined threshold.

Such activation means may simply consist in MOS switches whose grids are controlled by an enable/disable signal E/D to be delivered by an output of an opamp comparator included in the comparison means CMP, which MOS switches may be arranged between Gilbert cells intended to multiply the preliminary etimates $hp_{n1}...hp_n...hp_{N-n2}$ with their respective weighting coefficients $w_{n1}...w_n...w_{N-n2,}$ on the one hand, and a power supply of such multiplying cells, on the other hand.

When the computation of the linear combinations of the preliminary estimates is activated, the secondary estimate $hs_n$ of a channel parameter related to a given carrying signal $Cs_n$ may be expressed as :

$$hs_n = w_{n-n1-1}^T . hp_{n1+1} \qquad \text{for } n=1,...,n1 ;$$
$$hs_n = w_0^T . hp_n \qquad \text{for } n=n1+1,...,N-n2 ; \text{ and}$$
$$hs_n = w_{n+n2-N}^T . hp_{N-n2} \qquad \text{with } n=N-n2+1,...,N ;$$

where bold letters identify a matrix or a vector, and "T" the conjugate transpose of such a matrix or vector.

The vector $\mathbf{hp_n}=[hp_{n-n1},...hp_n,...hp_{n+n2}]^t$ is thus a reduced preliminary channel estimation vector related to the group of n2+n1+1 adjacent carrying signals $Cs_{n-n1}...Cs_n...Cs_{n+n2}$ enclosing a given carrying signal $Cs_n$, the symbol "t" identifying the transpose of such a vector.

In a special configuration (nl, n2) may for example be chosen equal to (1, 0), so that the secondary estimate $hs_n$ of a channel parameter related to a given carrying signal $Cs_n$ may be expressed in this configuration as :

$$hs_n=w_{-1}^T.hp_2 \qquad\qquad \text{for n=1 ; and}$$

$$hs_n=w_0^T.hp_n \qquad\qquad \text{for n=2,\ldots, N ;}$$

with $\mathbf{hp_n}=[hp_{n-1}, hp_n]^t$

In order to exploit a possible frequency correlation between two carrying signals, $Cs_{n-1}$ and $Cs_n$, the weighting coefficients vectors $\mathbf{w_{-1}}$ and $\mathbf{w_0}$ are computed as :

$$\mathbf{w_{-1}}=[1, \Phi]^t \text{ and } \mathbf{w_0}=[\Phi, 1]^t, \text{ with}$$

$$\Phi = \frac{\sum_{n=2}^{N} hp_n^{\ast}{}_{-1}.hp_n}{\sum_{n=2}^{N}\|hp_n\|^2} \text{ ,}$$

where the symbol "*" identifies the conjugate of a complex number.

The parameter $\Phi$ is thus a correlation parameter averaged over a plurality of different carrying signals, and enables to pool together information relevant to a given channel, most of this information having initially been produced in relation with other channel parameters.

The parameter $\Phi$ may be optionnaly be compared to a predetermined threshold prior to the actual computation of any linear combination of the premiminary estimates described above, and even before computing the weighting coefficients vectors.

Such a comparison sub-step will enable to determine if the linear combinations intended to be computed in the course of the secondary estimation step will indeed produce more accurate estimates of the channel parameters than the preliminary estimates $hp_n$. A secondary estimate $hs_n$ produced by such a secondary estimation step will provide significant improvement with respect to the preliminary estimate $hp_n$ only if neighbour channels are sufficiently linked to each other, which is expressed by an average value $\Phi$ of the correlation parameter exceeding the predetermined threshold. If this condition is not fulfilled, neither the weight determination sub-step nor the computation of linear combinations of the preliminary estimates need be carried out, the preliminary estimates $hp_n$ being then directly selected for constituting the channel parameters.

The above example may also be used for illustrating the usefulness of the invention in a situation where a given channel CHn doesn't actually feature any carrying signal $Cs_n$, and thus no pilot symbol. In such a case, known techniques based on the computation of an average value over time of preliminary estimates related to said carrying signal $Cs_n$ will be useless, since no pilot symbol is available for computing a preliminary estimate related to this particular signal $Cs_n$. The invention, however, enables to compute a channel parameter estimate as an average value of a correlation between preliminary estimates of channel parameters related to adjacent channels, for example CHn-1 and CHn+1, in which case the channel parameter estimate representing the channel response to carrying signal $Cs_n$ may be expressed as $hs_n=(hp_{n+1}+hp_{n-1})/2$, which also constitues an average value of a correlation parameter

Other mathematical functions intended to compute average values of extended correlations between multiple preliminary estimates related to channels neighbouring a given channel for which no signal is available may, of course, be used for the same purpose as that described above in accordance with the general frequency averaging principle of the present invention.

In another possible embodiment of the invention, n1 and n2 may both be chosen equal to a same integer number n0. In such an embodiment of the invention, the secondary estimate $hs_n$ of a channel parameter related to a given carrying signal $Cs_n$ may thus be expressed as :

$$hs_n = w_{n-n0-1}^T . hp_{n0+1} \qquad \text{for } n=1,\ldots, n0 ;$$

$$hs_n = w_0^T . hp_n \qquad \text{for } n=n0+1,\ldots, N-n0 ; \text{ and}$$

$$hs_n = w_{n+n0-N}^T . hp_{N-n0} \qquad \text{with } k=N-n0+1,\ldots, N ;$$

As will now be explained, the weight determination sub-step may involve minimizing an average value of an error criterion, which average value is then computed over multiple carrying signals :

The error $e_n$ introduced by the estimation may be expressed as $e_n=|h_n-hs_n|$, where $h_n$ is the real and unknown channel parameter quantifying the frequency response of the communication channel to the carrying signal $Cs_n$. The weighting coefficients to be used for computing the linear combination intended to produce the secondary estimate should thus be chosen in such a way that an average value of the difference between the estimated and real channel parameters $hs_n$ and $h_n$, or, preferably, an average value of a squared value of said difference will be minimized, which may be expressed as :

$$\frac{1}{N - 2.n0} \sum_{n=n0+1}^{N-n0} \left| w_k^T . hp_n - hn + k \right|^2 \to \min$$

As will now be explained, the use of such an error criterion enables to compute weighting coefficients by solving a simple equation system, which may be performed almost instantaneously by matricial computation.

Indeed, the inventor has observed that the weight vector $w_k$ meeting this error criterion may be expressed as $w_k = I-(P/q).\Phi^{-1}$, where $I$ is the identity matrix, $(P/q)$ is a real number representative of the variance of the interference-plus-noise adversely affecting the transmission of the carrying signal $Cs_n$, and $\Phi$ is a correlation matrix of which each component is formed by an average value of a correlation parameter, which average value may be computed over the whole group of N-2.n0 adjacent carrying signals $Cs_{n-n0}...Cs_n...Cs_{n+n0}$ enclosing the carrying signal $Cs_n$, which may be expressed as follows :

$$\Phi = \frac{1}{N - 2.n0} \sum_{n=n0+1}^{N-n0} hp_n . hp_n^T$$

In another example, each component $[\Phi]_{r1,r2}$ of row r1 and column r2 of the correlation matrix $\Phi$ may be formed by an average value over only the two carrying signals $Cs_{r1}$ and $Cs_{r2}$ of a correlation between the preliminary estimates $hp_{r1}$ and $hp_{r2}$ related to said carrying signals $Cs_{r1}$ and $Cs_{r2}$. Such a computation scheme of the correlation matrix will, of course, yield less accurate results but will require less computing power for its execution, because each component will result from a simple scalar product between two values instead of a matricial product between two vectors of size N-2.n0 required in the general form expressed above.

The invention illustrated by the above described embodiments thus enables to almost instantaneously perform an accurate channel response estimation on the basis of a very limited number of received pilot symbols, and is thus particularly well-suited for data packet transmission.

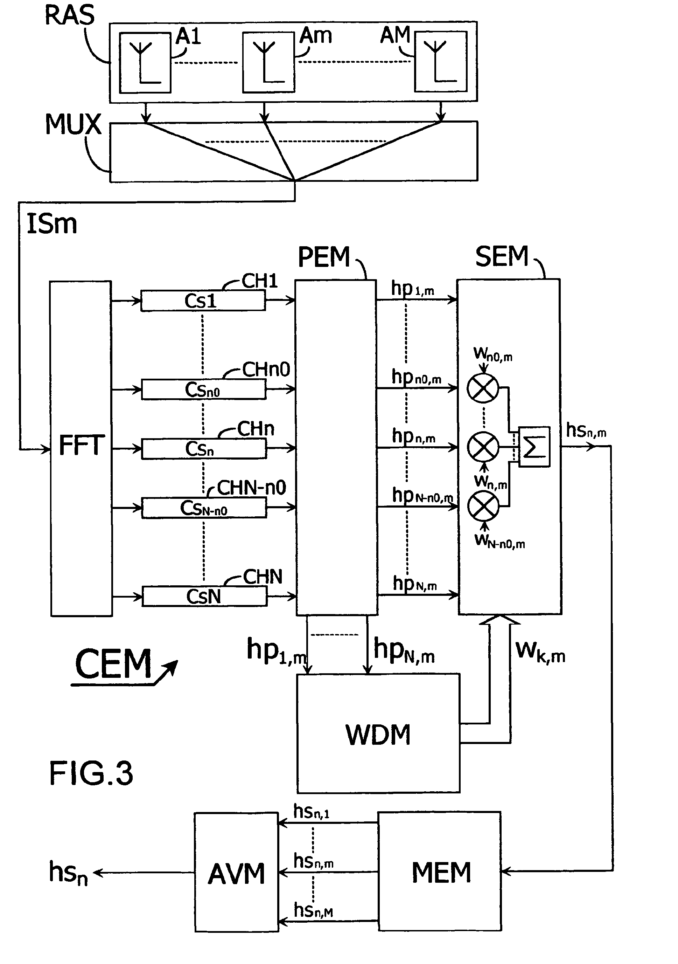

Fig.3 diagrammatically shows another embodiment of the invention, according to which the receiving device is provided with multiple receiving antennas A1...Am...AM included in the receiving antenna system RAS, each antenna Am (for j=1 to M) being intended to pick up an incoming signal ISm including the multiple carrying signals $Cs_i$ (for i=1 to N) transmitted through respective communication channels CHi. This receiving device includes multiplexing means MUX for sequencing over time the incoming signals ISm which are to be successively fed to the Fast Fourrier Transform module FFT and then processed by channel estimation means CEM identical to those described above. In other embodiments of such a receiving device, multiple channel estimation means CEM identical to those described above may be arranged in parallel for simultaneously processing all incoming signals IS1...ISm...ISM, which will of course be quicker but will require a larger processing circuit.

In this embodiment of the invention, the channel estimation means will perform a computation of multiple groups of channel parameters $hs_{1,m}...hs_{n,m}...hs_{N,m}$ (for m=1 to M), each group comprising channel parameters $hs_i$ (for i=1 to N) representative of a channel response to carrying signals $Cs_i$ (for i=1 to N) picked up by a given antenna Am.

The receiving device further includes storage means MEM for storing each channel parameter $hs_{1,m}...hs_{n,m}...hs_{N,m}$ (for m=1 to M), of each m-th group and averaging means AVM for computing an average value $hs_n$

between at least two, and preferably, as in this example, all channel parameters $hs_{n,1}...hs_{n,m}...hs_{n,M}$, related to a same carrying signal $Cs_n$, which may be expressed as :

$$hs_n = \frac{1}{M} \sum_{m=1}^{M} hs_{n,m}$$

This embodiment the invention enables to increase the amount of information related to a same carrying signal $Cs_n$ to be pooled together, which will give a higher relevance to the channel parameter $hs_n$ whose value is averaged over the multiple receiving antennas, without causing a significant increase in the computation time of this averaged value.

**Claims**

1.  A method for receiving data by means of multiple carrier signals ($Cs_1$, $Cs_2...Cs_N$) through multiple communication channels (CH1, CH2, CHN), each carrier signal being received through a respective communication channel which method involves a computation of channel parameters representative each of a response of one of said communication channels to one of said carrier signals, **characterised in that** said method includes the steps of:

    - generating preliminary estimates (PEM) of the channel parameters,
    - computing (WDM) a correlation parameter by computing at least one average value of at least two products, each product being formed by multiplying a preliminary estimate of one channel parameter representative of the response of one communication channel by at least another preliminary estimate or the conjugate of another preliminary estimate of one channel parameter representative of the response of one adjacent communication channel,
    - determining (WDM) weighting coefficients to be applied to the preliminary estimates from the computed correlation parameter,
    - determining (SEM) a secondary estimation of channel parameters from linear combinations of the preliminary estimates, the preliminary estimates being multiplied by the weighting coefficients.

2.  A method as claimed in claim 1, in which the weight determination step involves minimizing an average value of an error criterion, which average value is computed over at least two preliminary estimates.

3.  A method as claimed in claim 2, in which the weight determination step involves determination of a correlation matrix having elements, each element being computed as an average value of at least two products, each product being formed by multiplying a preliminary estimate of one channel parameter representative of the response of one communication channel by at least another preliminary estimate or the conjugate of another preliminary estimate of one channel parameter representative of the response of one adjacent communication channel.

4.  A method as claimed in one claims 1 to 3, including a comparison step in the course of which the correlation parameter is compared to a predetermined threshold, the secondary estimation step being actually carried out only if said correlation parameter exceeds said predetermined threshold.

5.  A method for receiving data intended to be used in a telecommunication system in which at least one receiver is provided with multiple receiving antennas, each being able to pick up multiple carrier signals by means of which data is transmitted, which method involves a computation of multiple groups of channel parameters, each group comprising channel parameters representative of a channel response to carrier signals picked up by a given antenna, which channel parameters are computed by carrying out a method as claimed in any one of claims 1 to 6, and an averaging step, in the course of which an average value between at least two channel parameters related to a same carrier signal and belonging to at least two different groups of channel parameters is computed for each carrier signal.

6.  A receiving device for receiving data transmitted by means of multiple carrier signals ($Cs_1$, $Cs_2...Cs_N$) through multiple communication channels, each carrier signal being received through a respective communication channel which receiving device is to perform a computation of channel parameters representative of a response of one communication channel to one of said carrier signals, **characterised in that** said receiving device comprises:

    - means (PEM) for generating preliminary estimates of the channel parameters,

- means (WDM) for computing a correlation parameter by computing at least one average value of at least two products, each product being formed by multiplying a preliminary estimate of one channel parameter representative of the response of one communication channel by at least another preliminary estimate or the conjugate of another preliminary estimate of one channel parameter representative of the response of one adjacent communication channel,
- means (WDM) for determining weighting coefficients to be applied to the preliminary estimates from the computed correlation parameter,
- means (SEM) for determining a secondary estimation of channel parameters from linear combinations of the preliminary estimates, the preliminary estimates being multiplied by the weighting coefficients.

7. A receiving device as claimed in claim 6, further comprising:

- means (CMP) for comparing the correlation parameter to a predetermined threshold, and activation means for triggering computation of the linear combinations of the preliminary estimates only if said correlation parameter exceeds said predetermined threshold.

**Patentansprüche**

1. Verfahren zum Empfangen von Daten mithilfe von mehreren Trägersignalen ($Cs_1$, $Cs_2$ ... $Cs_N$) über mehrere Kommunikationskanäle (CH1, CH2, CHN), wobei jedes Trägersignal über einen jeweiligen Kommunikationskanal empfangen wird, welches Verfahren eine Berechnung von Kanalparametern enthält, die jeweils eine Antwort von einem der Kommunikationskanäle auf eines der Trägersignale darstellen, **dadurch gekennzeichnet, dass** das Verfahren die folgenden Schritte enthält:

- Erzeugen vorläufiger Schätzungen (PEM) der Kanalparameter,
- Berechnen (WDM) eines Korrelationsparameters durch Berechnen wenigstens eines Durchschnittswerts von wenigstens zwei Produkten, wobei jedes Produkt durch Multiplizieren einer vorläufigen Schätzung von einem Kanalparameter, der die Antwort von einem Kommunikationskanal darstellt, mit wenigstens einer anderen vorläufigen Schätzung oder der Konjugierten einer anderen vorläufigen Schätzung von einem Kanalparameter, der die Antwort von einem benachbarten Kommunikationskanal darstellt, ausgebildet wird,
- Bestimmen (WDM) von auf die vorläufigen Schätzungen anzuwendenden Gewichtungskoeffizienten aus dem berechneten Korrelationsparameter,
- Bestimmen (SEM) einer sekundären Schätzung von Kanalparametern aus Linearkombinationen der vorläufigen Schätzungen, wobei die vorläufigen Schätzungen mit den Gewichtungskoeffizienten multipliziert werden.

2. Verfahren nach Anspruch 1, wobei der Gewichtungsbestimmungsschritt ein Minimieren eines Durchschnittswerts eines Fehlerkriteriums enthält, welcher Durchschnittswert über wenigstens zwei vorläufige Schätzungen berechnet wird.

3. Verfahren nach Anspruch 2, wobei der Gewichtungsbestimmungsschritt eine Bestimmung einer Korrelationsmatrix mit Elementen enthält, wobei jedes Element als Durchschnittswert von wenigstens zwei Produkten berechnet wird, wobei jedes Produkt durch Multiplizieren einer vorläufigen Schätzung von einem Kanalparameter, der die Antwort von einem Kommunikationskanal darstellt, mit wenigstens einer anderen vorläufigen Schätzung oder der Konjugierten einer anderen vorläufigen Schätzung von einem Kanalparameter, der die Antwort von einem benachbarten Kommunikationskanal darstellt, ausgebildet wird.

4. Verfahren nach einem der Ansprüche 1 bis 3, das einen Vergleichsschritt enthält, in dessen Verlauf der Korrelationsparameter mit einer vorbestimmten Schwelle verglichen wird, wobei der Schritt der sekundären Schätzung tatsächlich nur dann ausgeführt wird, wenn der Korrelationsparameter die vorbestimmte Schwelle übersteigt.

5. Verfahren zum Empfangen von Daten, die in einem Telekommunikationssystem verwendet werden sollen, in welchem wenigstens ein Empfänger mit mehreren Empfangsantennen versehen ist, die jeweils mehrere Trägersignale empfangen können, mithilfe von welchen Daten gesendet werden, welches Verfahren eine Berechnung mehrerer Gruppen von Kanalparametern enthält, wobei jede Gruppe Kanalparameter aufweist, die eine Kanalantwort auf Trägersignale darstellen, die durch eine gegebene Antenne empfangen sind, welche Kanalparameter durch Ausführen eines Verfahrens berechnet werden, wie es in einem der Ansprüche 1 bis 4 beansprucht ist, und einen Durchschnittsbildungsschritt, in dessen Verlauf ein Durchschnittswert zwischen wenigstens zwei Parametern, die auf ein selbes Trägersignal bezogen sind und die zu wenigstens zwei unterschiedlichen Gruppen von Kanalparametern gehören, für jedes Trägersignal berechnet wird.

**6.** Empfangsvorrichtung zum Empfangen von mithilfe von mehreren Trägersignale ($Cs_1$, $Cs_2$, ... $Cs_N$) gesendeten Daten über mehrere Kommunikationskanäle, wobei jedes Trägersignal über einen jeweiligen Kommunikationskanal empfangen wird, welche Empfangsvorrichtung zum Durchführen einer Berechnung von Kanalparametern dient, die eine Antwort von einem Kommunikationskanal auf eines der Trägersignale darstellen, **dadurch gekennzeichnet, dass** die Empfangsvorrichtung folgendes aufweist:

- eine Einrichtung (PEM) zum Erzeugen vorläufiger Schätzungen der Kanalparameter,
- eine Einrichtung (WDM) zum Berechnen eines Korrelationsparameters durch Berechnen wenigstens eines Durchschnittswerts von wenigstens zwei Produkten, wobei jedes Produkt durch Multiplizieren einer vorläufigen Schätzung von einem Kanalparameter, der die Antwort von einem Kommunikationskanal darstellt, mit wenigstens einer anderen vorläufigen Schätzung oder der Konjugierten einer anderen vorläufigen Schätzung von einem Kanalparameter, der die Antwort von einem benachbarten Kommunikationskanal darstellt, ausgebildet ist,
- eine Einrichtung (WDM) zum Bestimmen von auf die vorläufigen Schätzungen anzuwendenden Gewichtungskoeffizienten aus dem berechneten Korrelationsparameter,
- eine Einrichtung (SEM) zum Bestimmen einer sekundären Schätzung von Kanalparametern aus Linearkombinationen der vorläufigen Schätzungen, wobei die vorläufigen Schätzungen mit den Gewichtungskoeffizienten multipliziert werden.

**7.** Empfangsvorrichtung nach Anspruch 6, die weiterhin folgendes aufweist:

- eine Einrichtung (CMP) zum Vergleichen des Korrelationsparameters mit einer vorbestimmten Schwelle und eine Aktivierungseinrichtung zum Triggern einer Berechnung der Linearkombinationen der vorläufigen Schätzungen nur dann, wenn der Korrelationsparameter die vorbestimmte Schwelle übersteigt.

## Revendications

**1.** Procédé de réception de données au moyen de multiples signaux porteurs ($Cs_1$, $Cs_2$...$Cs_N$) par l'intermédiaire de multiples canaux de communication (CH1, CH2, CHN), chaque signal porteur étant reçu par l'intermédiaire d'un canal de communication respectif, le procédé comportant un calcul de paramètres de canal chacun représentatif d'une réponse d'un desdits canaux de communication à un desdits signaux porteurs, **caractérisé en ce que** le procédé comporte les étapes de :

- génération d'estimations préliminaires (PEM) des paramètres de canal,
- calcul (WDM) d'un paramètre de corrélation par calcul d'au moins une valeur moyenne d'au moins deux produits, chaque produit étant formé en multipliant une estimation préliminaire d'un paramètre de canal représentatif de la réponse d'un canal de communication par au moins une autre estimation préliminaire ou le conjugué d'une autre estimation préliminaire d'un paramètre de canal représentatif de la réponse d'un canal de communication adjacent,
- détermination (WDM) de coefficients de pondération à appliquer sur les estimations préliminaires à partir du paramètre de corrélation calculé,
- détermination (SEM) d'une estimation secondaire des paramètres de canal à partir de combinaisons linéaires des estimations préliminaires, les estimations préliminaires étant multipliées par les coefficients de pondération.

**2.** Procédé selon la revendication 1, dans lequel l'étape de determination de pondérations comporte une minimisation d'une valeur moyenne d'un critère d'erreur, la valeur moyenne est calculée sur au moins deux estimations préliminaires.

**3.** Procédé selon la revendication 2, dans lequel l'étape de détermination de pondérations comporte une détermination d'une matrice de corrélation constituée d'éléments, chaque élément étant calculé comme une moyenne d'au moins deux produits, chaque produit étant formé en multipliant une estimation préliminaire d'un paramètre de canal représentatif de la réponse d'un canal de communication par au moins une autre estimation préliminaire ou le conjugué d'une autre estimation préliminaire d'un paramètre de canal représentatif de la réponse d'un canal de communication adjacent.

**4.** Procédé selon l'une quelconque des revendications 1 à 3, comportant une étape de comparaison dans laquelle the paramètre de corrélation est compare à un seuil prédéterminé, l'étape d'estimation secondaire étant mise en oeuvre seulement si ledit paramètre de corrélation est supérieur audit seuil prédéterminé.

**5.** Procédé de réception de donnée destinée à être utilisée dans un système de télécommunication dans lequel au moins un récepteur comporte de multiples antennes de réception, chacune étant apte à capter de multiples signaux porteurs par lesquels la donnée est transférée, le procédé comporte un calcul de multiples groupes de paramètres de canal, chaque groupe comprenant des paramètres de canal représentatifs d'une réponse de canal aux signaux porteurs captés par une antenne donnée, les paramètres de canal sont calculés selon le procédé selon l'une quelconque des revendications 1 à 6, et une étape de calcul de moyenne au cours de laquelle une valeur moyenne entre au moins deux paramètres de canal relatifs au même signal porteur et appartenant à au moins deux groupes différents de paramètres de canal est calculé pour chaque signal porteur.

**6.** Dispositif de réception de donnée transmise au moyen de multiples au moyen de multiples signaux porteurs ($Cs_1$, $Cs_2...Cs_N$) par l'intermédiaire de multiples canaux de communication (CH1, CH2, CHN), chaque signal porteur étant reçu par l'intermédiaire d'un canal de communication respectif, le dispositif de réception exécutant un calcul de paramètres de canal chacun représentatif d'une réponse d'un desdits canaux de communication à un desdits signaux porteurs, **caractérisé en ce que** ledit dispositif de réception comporte :

- des moyens de génération d'estimations préliminaires (PEM) des paramètres de canal,
- des moyens de calcul (WDM) d'un paramètre de corrélation par calcul d'au moins une valeur moyenne d'au moins deux produits, chaque produit étant formé en multipliant une estimation préliminaire d'un paramètre de canal représentatif de la réponse d'un canal de communication par au moins une autre estimation préliminaire ou le conjugué d'une autre estimation préliminaire d'un paramètre de canal représentatif de la réponse d'un canal de communication adjacent,
- des moyens de détermination (WDM) de coefficients de pondération à appliquer sur les estimations préliminaires à partir du paramètre de corrélation calculé,
- des moyens de détermination (SEM) d'une estimation secondaire des paramètres de canal à partir de combinaisons linéaires des estimations préliminaires, les estimations préliminaires étant multipliées par les coefficients de pondération.

**7.** Dispositif de réception selon la revendication 6, comportant en outre :

- des moyens (CMP) pour comparer le paramètre de corrélation à un seuil prédéterminé, et des moyens d'activation pour déclencher un calcul des combinaisons linéaires des estimées préliminaires seulement si ledit paramètre de corrélation est supérieur audit seuil prédéterminé.

FIG.1

FIG.2

RAS

A1    Am    AM

MUX

ISm

PEM    SEM

CH1
Cs1                    $hp_{1,m}$

$W_{n0,m}$

CHn0
$Cs_{n0}$              $hp_{n0,m}$

CHn
$Cs_n$                 $hp_{n,m}$                $hs_{n,m}$

FFT
CHN-n0
$Cs_{N-n0}$            $hp_{N-n0,m}$

$W_{n,m}$

CHN
CsN                    $hp_{N,m}$

$W_{N-n0,m}$

CEM

$hp_{1,m}$    $hp_{N,m}$              $W_{k,m}$

WDM

FIG.3

$hs_{n,1}$

AVM           $hs_{n,m}$        MEM

$hs_n$

$hs_{n,M}$

**EP 1 613 011 B1**

**REFERENCES CITED IN THE DESCRIPTION**

**Patent documents cited in the description**

- US 5973642 A